# FASCICULE DE BREVET EUROPEEN

(11) **EP 1 995 494 B1**
(45) Date de publication et mention de la délivrance du brevet: **08.06.2011**
(21) Numéro de dépôt: 08305128.4
(22) Date de dépôt: 25.04.2008
(51) Int. Cl.: F16H 3/12, F16H 61/04

(54) **Boite de vitesses à crabots auto-éjectants à dérivation de couple par un rapport supérieur et procédé de changement de rapport associé**
Getriebe mit selbstausrückenden Klauen und Kupplungsverzweigung durch ein höheres Übersetzungsverhältnis und entsprechendes Schaltverfahren
Gearbox with self-ejecting claw clutch and power split by a higher gear and associated shifting method

(30) Priorité: 22.05.2007 FR 0755178
(43) Date de publication de la demande: 26.11.2008
(73) Titulaire: PEUGEOT CITROËN AUTOMOBILES S.A., 78140 Velizy Villacoublay (FR)
(72) Inventeur: Mitchell, Clément, 92250, La Garenne Colombes (FR); Lelasseux, Xavier, 92150, Suresnes (FR)

(56) Documents cités:
- EP-A- 0 367 020
- WO-A-01/29440
- FR-A- 2 186 104
- FR-A- 2 794 512
- US-A- 4 096 932

## Description

L'invention concerne une boîte de vitesses à crabots auto-éjectants à dérivation de couple par un rapport supérieur et un procédé de changement de rapport mettant en oeuvre cette boîte de vitesses. L'invention a notamment pour but d'améliorer le ressenti des changements de rapports d'une boîte de vitesses en évitant les ruptures de couple.

L'invention trouve une application particulièrement avantageuse dans le domaine des boîtes de vitesses manuelle pilotée (BVMP) pour véhicule automobile. Toutefois, l'invention peut également être mise en oeuvre avec les véhicules à deux roues motorisés.

Les véhicules connus comportent une chaîne de traction formée par un dispositif de propulsion (formé par un moteur thermique et/ou une machine électrique), un embrayage, et une boîte de vitesses qui entraîne les roues du véhicule. L'embrayage est relié d'une part au dispositif de propulsion et d'autre part à la boîte de vitesses, elle-même reliée aux roues.

Plus précisément, la boîte de vitesses comporte un arbre primaire relié à l'embrayage et un arbre secondaire relié aux roues du véhicule, ces deux arbres étant reliés entre eux par l'intermédiaire d'engrenages formant les rapports de vitesse.

Chaque engrenage comporte une roue liée en rotation à un des arbres et un pignon fou monté sur l'autre arbre. Des manchons de crabotage sont utilisés pour lier sélectivement les pignons fous à l'arbre sur lequel ils sont montés afin d'assurer un passage de vitesse.

A cet effet, le manchon est lié en rotation à son arbre mais est mobile axialement pour permettre l'accrochage avec le pignon fou. On parle de crabotage lorsque le manchon entre en coopération avec le pignon fou de sorte qu'un rapport de vitesse est engagé, et de décrabotage lorsque le manchon se dégage du pignon fou de sorte que le rapport est désengagé.

Une boîte de vitesses à crabots classiques, présente plusieurs inconvénients majeurs :
- des chocs générés par l'égalisation instantanée des vitesses de rotation (contrairement à un synchroniseur),
- un jeu de ré-attelage (le jeu de ré-attelage est le jeu angulaire existant, rapport engagé, entre le pignon fou et le manchon) important : ce jeu important est source d'inconfort lorsque le couple transmis change de signe passant de moteur menant à moteur mené, par exemple dans une situation de suivi de file sur autoroute, et
- une rupture de couple pendant le changement de rapport.

Certaines boîtes de vitesses connues (les plus répandues) comportent en outre des synchroniseurs qui ont pour rôle d'amener le crabot et le pignon fou à engrener à des vitesses de rotation quasi-identiques avant de réaliser le crabotage. Toutefois, de telles boîtes de vitesses ne permettent pas de transmettre du couple aux roues pendant les changements de rapport.

D'autres boîtes de vitesses remédient au problème de la rupture de couple lors du changement de rapport par le principe de la dérivation de couple.

C'est le cas notamment d'une boîte telle que décrite dans le document EP-A-0 367 020, divulguant toutes les caractéristiques du préambule de la revendication 1.

Certaines boîtes de vitesses enfin mettent en oeuvre des crabots auto-éjectants, tel que divulgué dans le document US 4 096 932.

L'invention se propose de résoudre d'une part le problème de rupture de couple lors du changement de rapport, et d'autre part le problème de choc généré par l'égalisation instantanée des vitesses de rotation.

A cette fin, l'invention met en oeuvre des crabots auto-éjectants, alors qu'un organe capable d'égaliser les vitesses de rotation des arbres par frottement est positionné sur le rapport final de démultiplication (la 6^{ème} sur une boîte de vitesses à 6 rapports) ou sur un rapport intermédiaire.

L'organe de frottement assure une dérivation de couple qui permet, en plus de transmettre du couple pendant le changement de rapport, de supprimer le choc inhérent à l'utilisation de crabots, source d'inconfort tout en conservant l'architecture conventionnelle.

Ainsi, lors d'un passage d'un rapport N vers N+1, l'organe de frottement transmet progressivement du couple par glissement (on utilise le fait que l'arbre primaire lié au moteur évolue à une vitesse de rotation plus importante que celui du pignon moteur du rapport final) jusqu'à provoquer la chute du régime d'arbre primaire.

Cette chute de régime permet au rapport N d'être automatiquement désengagé de manière mécanique par la définition géométrique spécifique des crabots auto-éjectants et d'engager le rapport N+1 alors que du couple est transmis par le rapport final. Dès que le rapport N+1 est engagé, l'organe de frottement est progressivement désactivé et le couple est intégralement transmis par le rapport N+1.

Si des crabots classiques étaient utilisés avec l'organe de frottement, il serait très difficile de désengager le rapport N dès que la rupture du contact entre les faces tirage d'anti-lâcher (qui assurent la transmission du couple lorsqu'un couple positif est transmis du moteur vers les roues) est détectée.

En effet, le risque est de ne pas désengager suffisamment rapidement le rapport N et de provoquer un blocage cinématique de la boîte de vitesses par contact entre les faces rétro d'anti-lâcher qui assurent la transmission du couple lorsqu'un couple positif est transmis des roues vers le moteur.

Le risque identifié est considérable puisque le jeu de ré-attelage est minimum (d'autant plus lorsqu'on utilise des crabots bi-étages qui présentent la particularité de présenter un jeu angulaire réduit en rapport engagé).

C'est pourquoi dans l'invention les crabots classiques sont remplacés par les crabots auto-éjectants qui permettent d'engager le rapport suivant N+1 alors que le rapport N est encore engagé. Cette technologie utilise le principe de l'éjection automatique des crabots N lorsque les crabots N+1 sont engagés, par apparition d'un différentiel négatif de régimes de rotation entre les crabots N et le pignon N dû à l'architecture même des boîtes conventionnelles. A cet effet, des angles des dents des pignons fous sont légèrement biseautés.

En résumé, l'invention présente les avantages suivants :
- l'organe de frottement associé au rapport supérieur permet de transmettre du couple pendant le changement de rapport, résolvant ainsi le principal inconvénient de la boîte de vitesses à synchroniseurs,
- tout en transmettant du couple, l'organe de frottement permet d'égaliser les vitesses de rotations de l'arbre et du pignon à craboter, éliminant le choc caractéristique d'une boîte de vitesses à crabots classique,
- en égalisant les vitesses de rotation avant crabotage, l'invention permet aussi de limiter au maximum les chocs des crabots auto-éjectants, et
- grâce à l'utilisation de profils auto-éjectant, l'invention permet d'éliminer le risque inhérent à l'association d'une boîte de vitesses à crabots avec la dérivation de couple sur le rapport le plus élevé, à savoir le risque de blocage cinématique.

L'invention concerne donc une boîte de vitesses de type manuelle pilotée conforme à l'objet de la revendication 1.

Selon une réalisation, l'organe de frottement est associé au rapport le plus grand de la boîte de vitesses.

Selon une réalisation, les pignons fous sont rassemblés par paire avec un seul manchon de crabotage auto-éjectant par paire, le manchon de crabotage d'une paire engageant l'un des deux pignons fous par déplacement dans une direction et l'autre pignon fou par déplacement dans l'autre direction, ces paires de pignons fous étant montées soit sur l'arbre primaire soit sur l'arbre secondaire.

Selon une réalisation, les paires de pignons fous sont agencées d'une manière telle, qu'elle permet d'engager deux rapports numériquement successifs avec des manchons de crabotage différents, notamment dans une configuration de rapport 1-4, 2-5, 3-6 ou 1-3, 4-6, 2-5.

Selon une réalisation, la combinaison des pignons est telle qu'elle permet d'avoir un mouvement des actionneurs pilotant les crabots dans un même sens pour un passage de rapports de vitesse successifs.

Selon une réalisation, les manchons de crabotage auto-éjectants sont associés à un étage de verrouillage du côté des pignons fous assurant le verrouillage du rapport de vitesse engagé.

Selon une réalisation, la boîte de vitesses comporte six rapports de vitesses, l'organe de frottement étant associé au rapport de 3^{ème} à 6^{ème}.

Selon une réalisation, l'organe de frottement est un synchroniseur classique de grande capacité énergétique, ou un embrayage de type multidisque humide, ou un embrayage sec.

Selon une réalisation, l'organe de frottement est remplacé par un rapport de démultiplication supplémentaire, ou intermédiaire, ne servant que pour le passage de couple temporaire lors du changement de rapport et l'égalisation des régimes des éléments à craboter lors du changement de rapport.

Selon une réalisation, l'arbre primaire est un arbre simple, non concentrique.

Selon une réalisation, la boîte de vitesses comporte un deuxième arbre secondaire.

L'invention concerne en outre un procédé de changement de rapport de vitesses montant avec couple positif pour passer d'un rapport initial à un rapport final, ce procédé mettant en oeuvre la boîte de vitesses selon l'invention, ce procédé comportant les étapes suivantes :
- ouvrir l'embrayage de manière à le mettre à la limite du couple fourni par le moteur thermique,
- positionner le crabot du rapport initial en position auto-éjectable,
- actionner l'organe de frottement de manière à réduire progressivement le couple transmis par le rapport initial jusqu'au couple nul de manière à amener la rampe du crabot des pignons fous en contact avec le crabot des manchons du rapport initial pour que ce crabots'éjecte mécaniquement,
- piloter la diminution du régime de l'arbre primaire jusqu'à atteindre sensiblement le régime du rapport final à engager par action sur l'organe de frottement,
- engager le rapport final en positionnant le manchon de crabotage auto-éjectant qui lui est associé en position de verrouillage,
- réduire progressivement le couple transmis par l'organe de frottement, de sorte que tout le couple soit transmis aux roues par le rapport final, et
- fermer progressivement l'embrayage.

Dans une mise en oeuvre, le procédé comporte l'étape d'utiliser l'organe de frottement pour positionner le crabot en position auto-éjectable.

L'invention concerne également un procédé de changement de rapport de vitesses descendant avec couple positif pour passer d'un rapport initial à un rapport final, ce procédé mettant en oeuvre la boîte de vitesses selon l'invention et comportant les étapes suivantes :
- ouvrir l'embrayage de manière à le mettre à la limite du couple fourni par le moteur thermique,
- positionner le crabot du rapport initial en position auto-éjectable,
- actionner l'organe de frottement de manière à réduire progressivement le couple transmis par le rapport initial jusqu'au couple nul de manière à amener la rampe du crabot des pignons fous en contact avec le crabot des manchons du rapport initial pour que ce crabot s'éjecte mécaniquement,
- diminuer le régime de l'arbre primaire de manière s'assurer que le crabot du rapport initial est éjecté,
- accélérer le moteur thermique de manière à lui faire atteindre le régime cible du rapport final à engager,
- piloter le régime de l'arbre primaire jusqu'à atteindre sensiblement le régime du rapport final à engager par action sur l'organe de frottement et de l'embrayage,
- engager le rapport final en positionnant le crabot auto-éjectant qui lui est associé en position de verrouillage,
- réduire progressivement le couple transmis par l'organe de frottement de manière à ce que tout le couple soit transmis aux roues par le crabot engagé, et
- fermer progressivement l'embrayage.

Dans une mise en oeuvre, le procédé comporte l'étape d'utiliser l'organe de frottement pour positionner le crabot en position auto-éjectable.

Dans une mise en oeuvre, l'accélération du moteur thermique est effectuée avant de positionner le crabot du rapport initial en position auto-éjectable, de manière à limiter l'énergie à passer dans l'organe de frottement.

L'invention concerne par ailleurs un procédé de changement de rapport montant ou descendant à couple négatif pour passer d'un rapport initial à un rapport final, ce procédé mettant en oeuvre la boîte de vitesses selon l'invention et comportant les étapes suivantes :
- ouvrir complètement l'embrayage,
- dégager le rapport initial,
- piloter le régime de l'arbre primaire via l'ouverture partielle de l'organe de frottement,
- engager le rapport final, et
- fermer l'embrayage.

Dans l'invention, on utilise la boîte de vitesses selon l'invention pour ralentir l'arbre primaire avant d'engager la marche arrière par action de l'organe de frottement avant engagement.

L'invention sera mieux comprise à la lecture de la description qui suit et à l'examen des figures qui l'accompagnent. Ces figures ne sont données qu'à titre illustratif mais nullement limitatif de l'invention. Elles montrent :
- figure 1 : une représentation schématique d'une chaîne de traction comportant une boîte de vitesses à 6 rapports selon l'invention ;
- figure 2 : des représentations schématiques des différentes positions a, b, b', c et d possibles que peut prendre un manchon de crabotage selon l'invention ;
- figure 3 : une représentation schématique en trois dimensions d'un manchon et des crabots auto-éjectants selon l'invention côté pignon fou ;
- figure 4 : une représentation schématique des états 0, 1, 2, 3 et 4 des manchons à crabots des rapports de vitesse lors d'un changement de rapport montant selon l'invention ;
- figures 5 : des représentations schématiques de crabots auto-éjectants à deux étages selon l'invention.

Les éléments identiques conservent la même référence d'une figure à l'autre.

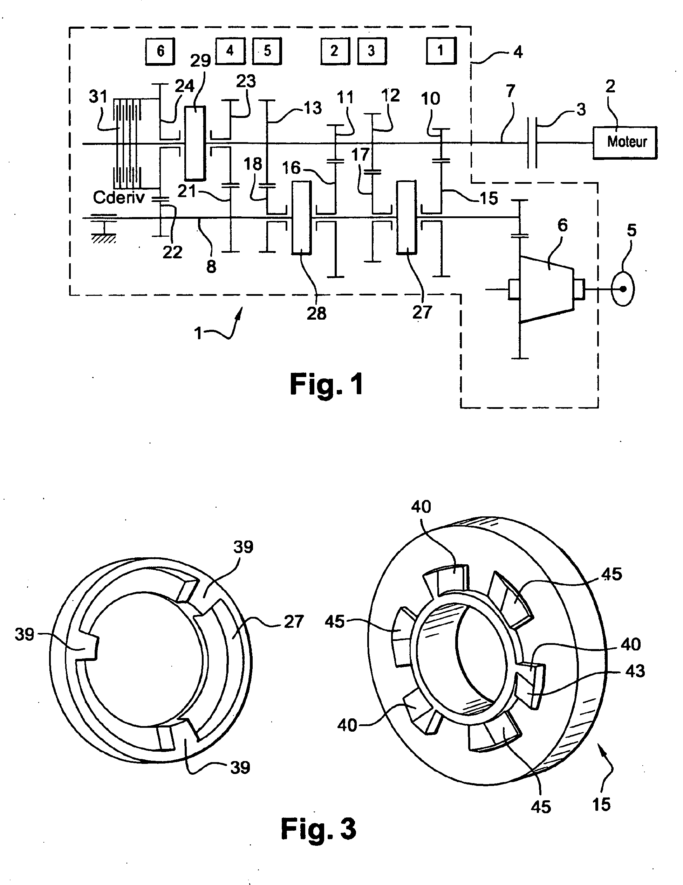

La figure 1 montre une chaîne 1 de traction d'un véhicule automobile formée par un moteur 2 thermique, un embrayage 3, une boîte 4 de vitesses délimitée par une ligne fermée discontinue, et des axes de sortie du différentiel vers les roues 5. L'embrayage 3 est relié d'une part au moteur 2 thermique et d'autre part à la boîte 4 de vitesses. Un différentiel 6 assure la liaison entre l'arbre secondaire 8 et les roues 5 du véhicule.

En variante, la chaîne 1 de traction est complétée par une machine électrique (non représentée) positionnée sur l'arbre d'entrée de la boîte 4 de vitesse entre l'embrayage 3 et la boîte 4 de vitesses.

Plus précisément, la boîte 4 de vitesses comporte un arbre 7 primaire relié à l'embrayage 3 et un arbre 8 secondaire relié aux roues 5. L'arbre 7 primaire est un arbre simple et pas un arbre concentrique comme dans la plupart des boîtes de vitesses à double embrayage.

Ces deux arbres 7 et 8 sont reliés entre eux par l'intermédiaire d'engrenages formant les rapports de vitesse 1 à 6 encadrés sur la figure. Les rapports de 1^{ère}, 2^{ème}, 3^{ème} et 5^{ème} sont formés chacun par une roue 10-13 entraînée par l'arbre 7 primaire et un pignon fou 15-18 relié à l'arbre 8 secondaire. Tandis que les rapports de 4^{ème} et 6^{ème} sont formés chacun par une roue 21-22 entraînée par l'arbre 8 secondaire et un pignon fou 23-24 relié à l'arbre 7 primaire.

Les rapports de vitesses sont rassemblés par paire avec un seul manchon de crabotage 27-29 qui engage l'un des deux pignons fous des engrenages par déplacement dans une direction et l'autre pignon par déplacement dans l'autre direction.

Ces paires de pignons sont agencées d'une manière permettant d'engager deux rapports numériquement successifs avec des manchons différents: par exemple et de manière non limitative (1-4 ; 2-5 ; 3-6) ou (1-3 ; 4-6 ; 2-5), comme représenté.

Ainsi, les manchons 27 et 28 montés sur l'arbre secondaire 8 sont respectivement positionnés entre les rapports de 1^{ère} et 3^{ème} et entre les rapports de 2^{ème} et de 5^{ème}. Tandis que le manchon 29 monté sur l'arbre 7 primaire est positionné entre les rapports de 4^{ème} et de 6^{ème}.

De préférence, une combinaison de rapports de type (1-4 ; 2-5 ; 3-6) est telle qu'elle permet d'avoir un mouvement des actionneurs pilotant les crabots dans un même sens pour un passage successif : le sens de dégagement du rapport de 1^{ère} est le même que le sens d'engagement du rapport suivant la 2^{ème} et ainsi de suite.

En outre, un organe 31 de couplage par frottement est monté sur le rapport le plus élevé, ici le rapport de 6^{ème}. Cet organe 31 de frottement a pour rôle d'égaliser les vitesses lors des changements de rapports montants (autrement dit d'amener le manchon de crabotage et le pignon à engrener à des vitesses de rotation identiques avant de réaliser le crabotage) tout en permettant la transmission de couple lors de ces changements de rapport.

L'organe 31 de frottement peut être par exemple un synchroniseur classique (par exemple de type « Borg Wamer » ou « New Process ») de grande capacité énergétique, mais aussi un embrayage de type multidisques humide, ou même un embrayage sec.

En variante, on crée un rapport de démultiplication supplémentaire ne servant que pour la fonction de dérivation de couple et d'égalisation des vitesses lors du changement de vitesse. On crée ainsi un rapport de 7^{ème} pour la boîte de vitesses représentée à six rapports.

En variante, la boîte de vitesses comporte six rapports et l'organe 31 est associé au rapport de 4^{ème} ou de 5^{ème}.

En variante, la boîte 4 de vitesses comporte un deuxième arbre secondaire (non représenté), les paires de pignons fous étant alors réparties entre ces trois arbres.

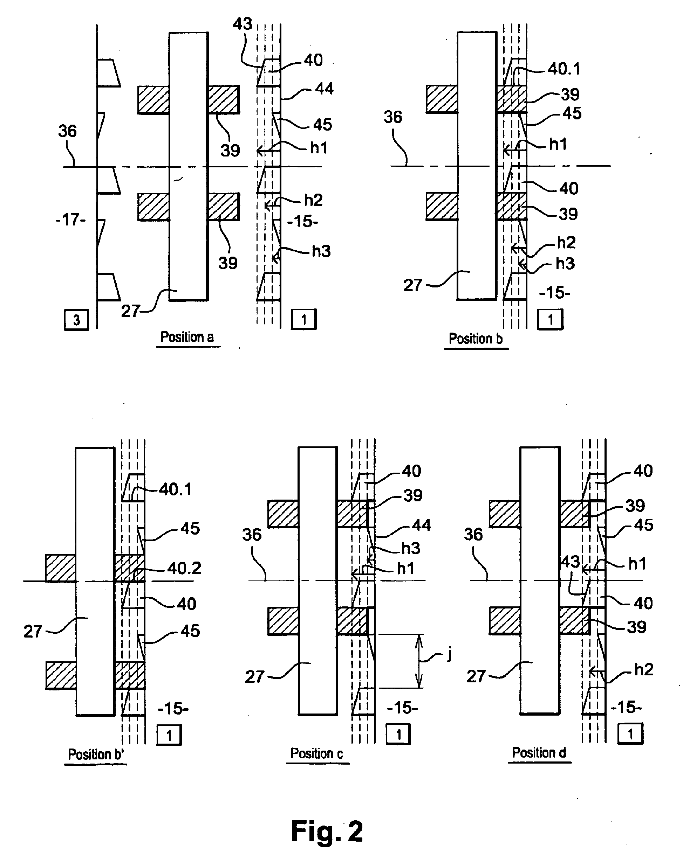

La figure 2 montre des représentations schématiques du manchon de crabotage 27 auto-éjectants monté sur l'arbre 8 entre les pignons fous 15 et 17 des rapports de 1^{ère} et de 3^{ème} selon cinq positions a, b, b', c et d, ce manchon 27 étant semblable aux manchons de crabotage 28 et 29.

Le manchon 27 est lié en rotation sur l'arbre 8 et mobile axialement suivant l'axe 36 de l'arbre 8. Le manchon 27 comporte une couronne de crabots ou dents 39 destinées à entrer en coopération avec des crabots ou dents 40 associées aux pignons fous 15 et 17. Les dents 40 présentent une hauteur h1 par rapport à la face radiale des pignons fous.

En outre, comme représenté sur les figures 2 et 3, chaque pignon 15, 17 comporte des rampes 43 sur le flanc rétro 40.2 de ses dents (ce flanc rétro assure la transmission du couple lorsqu'un couple positif est transmis des roues du véhicule vers le moteur).

Ces rampes 43 s'étendent entre les niveaux h1 et h2 par rapport à la face 44 du pignon, le niveau h2 étant inférieur à h1. Les dents 40 présentent ainsi un profil en forme de trapèze. Dans une réalisation, ces rampes 43 présentent une inclinaison comprise environ entre 10 et 40 degrés.

De préférence, chaque pignon 15, 17 comporte en outre des étages 45 de verrouillage positionnés régulièrement sur sa face 44 radiale, entre les dents 39. Ces étages 45 présentent une hauteur h3 par rapport à la face 44 des pignons fous, h3 étant inférieur à h2.

Ces étages 45 de verrouillage permettent de limiter le jeu de ré-attelage j entre les dents 39 du manchon et les dents 40 du pignon en position verrouillée. Ces étages 45 présentent un profil triangulaire de manière à faciliter le verrouillage du rapport de vitesse, l'inclinaison des étages 45 étant opposée à celle des rampes 43 (les valeurs des angles d'inclinaison des étages 45 et des rampes 43 ne sont pas forcément égales).

Comme représenté sur la figure 3, les dents 39 sont disposées régulièrement autour du manchon 27, et présentent une dimension égale à la distance qui sépare un étage 45 de verrouillage d'une dent 40.

En variante, les dents 39 présentent également une pente 47 sensiblement identique à celle des étages 45 de verrouillage.

Le manchon de crabotage 27 est apte à prendre cinq positions différentes : une position neutre (position a), une position rapport verrouillé (position b), une position rapport verrouillé avec un jeu de ré-attelage non verrouillé (position b'), une position rapport engagé avec un jeu de ré-attelage important (position c), et une position auto-éjectable (position d).

Dans la position a, neutre, le manchon 27 est positionné entre les pignons 15 et 17 de sorte qu'il est dégagé des rapports de vitesse de 1^{ère} et 3^{ème}. Les dents 39 du manchon 27 sont positionnées à une distance des faces 44 radiales des crabots supérieure à h1. Ainsi, aucun des pignons fous 15, 17 n'est lié en rotation avec l'arbre 8 secondaire.

Dans la position b, rapport verrouillé, les dents 39 du manchon 27 sont bloquées entre les faces 40.1 de tirage des dents 40 et les faces de l'étage 45 perpendiculaires à la face radiale du pignon fou 15. Le pignon fou 15 est alors lié en rotation à l'arbre 8 sur lequel est monté le manchon 27. Lors de la transmission d'un couple moteur, les dents 39 prennent appui sur les faces 40.1 de tirage des dents 40 des pignons.

Tandis que lors de la transmission d'un couple de freinage de type frein moteur, les dents 39 du manchon 27 prennent appui sur les étages 45 de verrouillage. Dans la position b, le jeu de ré-attelage est minimum.

Dans la position b', rapport verrouillé avec un jeu de ré-attelage non verrouillé, les dents 39 sont plaquées contre le pignon fou 15 entre le flanc 40.2 rétro des dents 40 et la face inclinée des étages 45. Une telle position est mise en oeuvre par exemple dans le cas d'un changement de rapport descendant. Dans ce cas, dès qu'un couple positif sera transmis du moteur vers les roues, le contact entre les faces 40.2 et 40 n'existera plus et le flanc 45 garantit le passage de la position b' à b.

Dans la position c, rapport engagé avec jeu j de ré-attelage important, les dents 39 se situent à une distance comprise entre h1 et h3 de la face 44 du pignon 15. Une telle position est observable à l'engagement du rapport, avant le verrouillage de ce rapport.

Dans la position d, auto-éjectable, les dents 39 du manchon 27 sont à une distance située entre h1 et h2. Ainsi, les dents 39 peuvent transmettre du couple en prenant appui contre les faces 40.1 lorsque la vitesse de rotation du manchon 27 est supérieure à celle du pignon 15.

Dès que la vitesse de l'arbre 7 primaire diminue et que la vitesse de rotation du pignon 15 devient inférieure à celle du manchon 27. Les dents 39 suivent alors la rampe 43 et s'éloignent de la face 44 du pignon fou, de sorte que le rapport de vitesse est dégagé.

Pour assurer les déplacements axiaux du manchon 27, la boîte 4 de vitesses comporte un actionneur (non représenté) commandé par le calculateur de boîte de vitesses.

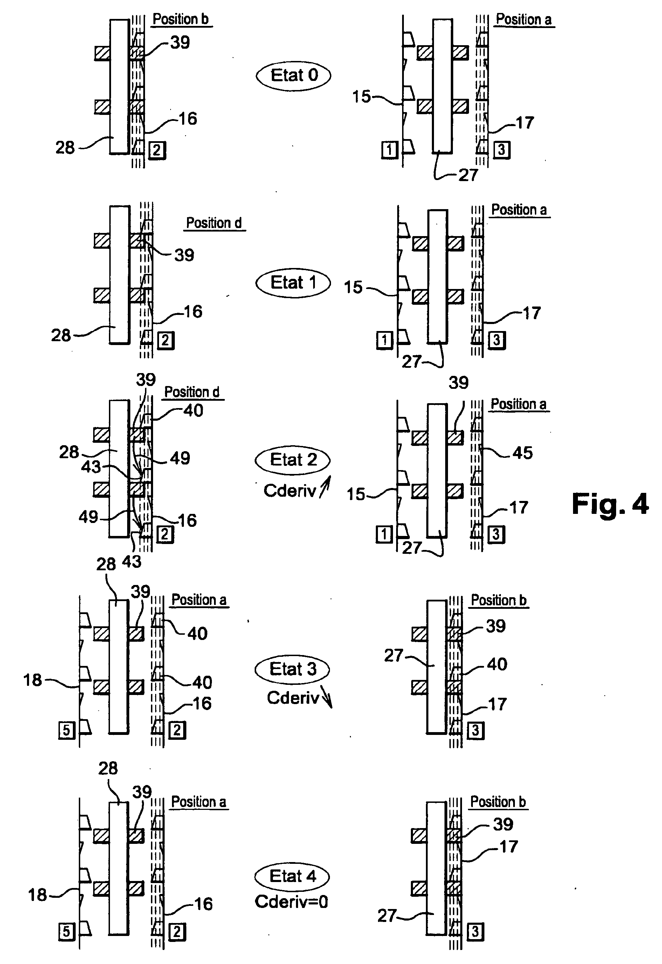

Lors d'un changement de rapport montant du rapport N (par exemple le rapport de 2^{ème}) vers le rapport N+1 (par exemple le rapport de 3^{ème}) sous couple moteur (« tirage »), les manchons de crabotage 27 et 28 de ces rapports présentent les états successifs représentés sur la figure 4.

Dans l'état 0 qui est l'état initial, le manchon 28 associé au rapport de 2^{ème} est en position b (rapport verrouillé, avec un jeu de ré-attelage quasi-inexistant). Tandis que le manchon 27 associé au rapport de 3^{ème} est en position a, soit en position neutre. L'embrayage 3 est ouvert de manière à être à la limite du couple fourni par le moteur 2 thermique.

Ensuite dans l'état 1, le manchon 28 du rapport de 2^{ème} est positionné en position d (auto-éjectable). A cet instant, le couple moteur est toujours transmis par le rapport de démultiplication de 2^{ème}. Le manchon de crabotage 27 du rapport de 3^{ème} se trouve toujours en position a.

Pour positionner le manchon de crabotage 28 en position auto-éjectable, on utilise de préférence l'organe 31 de frottement. En effet, sous fort couple transmis, il est difficile de déplacer le manchon à cause de l'angle d'anti-lâcher (la force axiale d'extraction étant proportionnelle au couple transmis et à l'angle d'anti-lâcher).

En conséquence, il est possible d'actionner brièvement l'organe 31 de frottement afin de diminuer le couple transmis via le rapport initial (et donc la force axiale nécessaire à l'extraction).

Dans l'état 2, l'organe 31 de frottement est progressivement actionné de façon à transmettre un couple de dérivation Cderiv croissant. Au moment où le couple Cderiv de frottement généré par l'organe 31 est suffisant, la vitesse de l'arbre 7 primaire et des éléments qui lui sont liés diminue.

Le pignon 16 récepteur du rapport de 2^{ème} voit donc sa vitesse diminuer alors que le crabot 28 (en position axiale d) conserve une vitesse de rotation constante (celle de l'arbre 8 secondaire). La face 43 d'éjection des dents 40 du pignon du rapport de 2^{ème} entre donc en contact 49 avec les dents du manchon du crabot 28, ce qui a pour conséquence d'éjecter le manchon du crabot 28, qui revient en position neutre (rapport désengagé).

Dans l'état 3, le manchon 28 est en position a et le manchon de crabotage 27 est en position b, le rapport de 3^{ème} étant engagé à l'instant où la vitesse de rotation du pignon 17 du rapport de 3^{ème} est égale à celle de l'arbre 8 secondaire (dont le manchon est solidaire en rotation). On évite ainsi le choc de crabotage du au fait qu'il existe une différence de vitesse de rotation entre les deux pièces à craboter (le manchon 27 et le pignon 17). L'égalisation des vitesses de rotation du pignon 17 et de l'arbre 8 se produit pendant l'éjection du rapport de 2^{ème}

A cet instant, on diminue la pression appliquée sur les surfaces de frottement de l'organe 31, afin de transmettre de moins en moins de couple Cderiv de dérivation par la démultiplication du rapport de 6^{ème}.

Dans l'état 4, le rapport de 3^{ème} est engagé et le couple est intégralement transmis via ce rapport (autrement dit le couple de dérivation Cderiv passant par l'organe 31 est nul).

On remarque que d'une part, un couple Cderiv a été transmis pendant le changement de rapport, et d'autre part, que ce couple Cderiv appliqué a permis d'égaliser les vitesses de rotation du manchon 27 et du pignon 17 correspondant au rapport cible de 3^{ème}, évitant ainsi le choc de crabotage.

En outre, il est possible d'effectuer des changements de rapports de type descendant sous couple (« kick down ») grâce à l'organe de 6ème suivant la séquence suivante :

Dans une première étape, l'embrayage 3 principal est mis en phase de glissement.

Dans une deuxième étape, un couple Cderiv de dérivation est généré par l'organe de 6^{ème}, ce qui va progressivement faire chuter le régime de l'arbre 7 primaire.

Dans une troisième étape, dès la chute de régime, le rapport N est désengagé. On diminue le régime de l'arbre 7 primaire de manière s'assurer que le crabot du rapport initial est éjecté.

Dans une quatrième étape, le moteur 2 thermique est accéléré pour relancer le régime d'arbre 7 primaire (cette accélération est possible par le faible couple transmis par glissement via l'organe 31 de 6^{ème}).

Dans une cinquième étape, lorsque la vitesse du pignon du rapport N-1 (rapport cible) est égale à celle de l'arbre 8 secondaire, l'engagement du rapport N-1 est déclenché.

Dans une sixième étape, on ouvre l'organe de 6^{ème}, de sorte qu'il ne génère plus aucun couple de dérivation.

L'invention peut également être utilisée pour faciliter l'engagement de la marche arrière, en freinant les inerties encore en rotation lors de la tentative d'engagement du rapport de marche arrière.

A cet effet, on ralentit l'arbre 7 primaire avant d'engager la marche arrière par action de l'organe 31 avant engagement, ce qui autorise l'utilisation de la technologie crabots en évitant ses inconvénients connus.

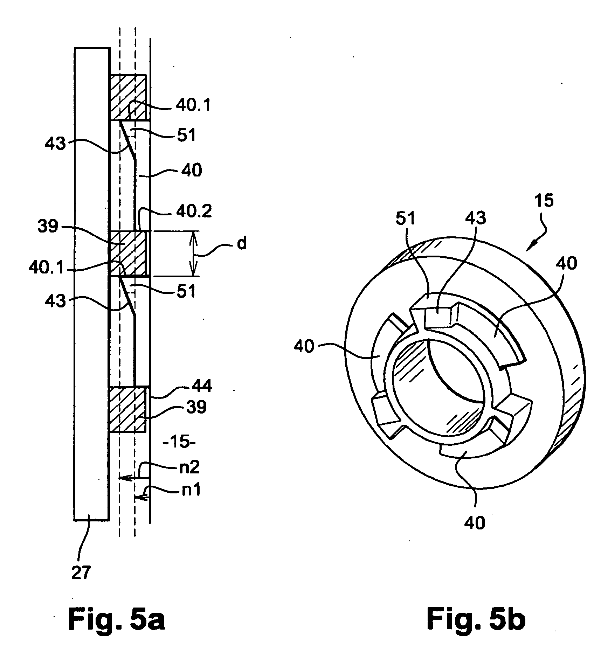

La figure 5a montre une variante de crabots auto-éjectants selon l'invention à 2 étages.

Dans cette réalisation, les dents 40 du pignon fou sont séparées entre elles d'une distance d sensiblement égale à la largeur des dents 39 du manchon 27, pour limiter le jeu de ré-attelage.

Les dents 40 présentent chacune une pente 43 du côté de leur face rétro 40.2. Cette pente 43 s'étend entre les niveaux n1 et n2 et permet l'éjection du rapport précédent.

Dans une première positon (celle représentée) les dents 39 du manchon 27 sont plaquées contre la face 44 radiale du pignon fou 15, entre les dents 40 de ce pignon fou 15. Le rapport de vitesse est alors verrouillé.

Lors de la transmission d'un couple moteur, les dents 39 du manchon 27 prennent appui sur les faces 40.1 de tirage des dents 40. Tandis que lors de la transmission d'un couple de freinage de type frein moteur, les dents 39 du manchon 27 prennent appui sur les faces 40.2 rétro des dents 40.

Dans une deuxième position axiale, les dents 39 du manchon 27 se situent à une distance axiale comprise entre n1 et n2, au niveau des pentes 43. Ainsi, les dents 39 peuvent transmettre du couple en prenant appui contre les faces 40.1 du pignon fou 15 lorsque la vitesse de rotation du manchon 27 est supérieure à celle du pignon 15.

Dès que la vitesse de rotation du manchon 27 devient inférieure à celle du pignon 15. Les dents 39 suivent alors la rampe 43 et s'éloignent de la face 44 du pignon fou, de sorte que le rapport de vitesse est dégagé.

Ainsi, dans l'invention, le manchon peut prendre plusieurs positions axiales (au moins deux) dont une d'auto-éjection.

En variante, la pente 43 est tronquée de sorte que les dents 40 présente un profil 51 en forme de trapèze. La figure 5b en trois dimensions correspond à ce mode de réalisation.

## Revendications

1. Boîte (4) de vitesses de type manuelle pilotée (BVMP) comportant :
- un arbre (7) primaire destiné à être relié à un moteur (2) thermique, et un arbre (8) secondaire destiné à être relié aux roues (5) du véhicule, ces deux arbres (7, 8) étant reliés entre eux par des engrenages formant les rapports de vitesse,
- ces engrenages comportant chacun une roue (10-12, 21, 22) solidaire en rotation d'un des arbres et un pignon fou (15-17, 23, 24) monté sur l'autre arbre qui engrènent entre eux, et
- des manchons de crabotage (27-29) associables chacun à deux pignons fous munis également de crabots (40), ces manchons de crabotage (27-29) assurant le changement des rapports de vitesse,
- un organe (31) de frottement associé à un rapport de démultiplication, cet organe (31) de frottement transmettant du couple de manière temporaire lors des changements de rapports via ce rapport de démultiplication,
**caractérisée ce que** :
- les crabots (39) des manchons (27-29) et des pignons fous (15-17, 23, 24) sont auto-éjectants, les crabots auto-éjectant (40) des pignons fous (15-17, 23, 24) présentant une rampe (43) sur leur flanc rétro (40.2)qui permettent d'engager le rapport final (N+1) alors que le rapport initial (N) est encore engagé, sans rupture de couple.

2. Boîte de vitesses selon la revendication 1, **caractérisé en ce que** :
- l'organe (31) de frottement est associé au rapport le plus grand de la boîte de vitesses.

3. Boîte de vitesses selon l'une des revendications 1 à 2, **caractérisée en ce que** :
- les pignons fous (15-17, 23, 24) sont rassemblés par paire avec un seul manchon de crabotage (27-29) auto-éjectant par paire,
- le manchon de crabotage d'une paire engageant l'un des deux pignons fous par déplacement dans une direction et l'autre pignon fou par déplacement dans l'autre direction,
- ces paires de pignons fous (15-17, 23, 24) étant montées soit sur l'arbre (7) primaire soit sur l'arbre (8) secondaire.

4. Boîte de vitesses selon la revendication 3, **caractérisée en ce que** :
- les paires de pignons fous sont agencées d'une manière telle, qu'elle permet d'engager deux rapports numériquement successifs avec des manchons de crabotage différents, notamment dans une configuration de rapport (1-4 ; 2-5 ; 3-6) ou (1-3 ; 4-6 ; 2-5).

5. Boîte de vitesses selon la revendication 3 ou 4, **caractérisée en ce que** :
- la combinaison des pignons est telle qu'elle permet d'avoir un mouvement des actionneurs pilotant les crabots dans un même sens pour un passage de rapports de vitesse successifs.

6. Boîte de vitesses selon l'une des revendications 1 à 5, **caractérisée en ce que** :
- les manchons de crabotage (27-29) auto-éjectants sont associés à un étage (45) de verrouillage du côté des pignons fous assurant le verrouillage du rapport de vitesse engagé.

7. Boîte de vitesses selon l'une des revendications 1 à 6, **caractérisée en ce qu'**elle comporte six rapports de vitesses, l'organe (31) de frottement étant associé au rapport de 3^{ème} à 6^{ème}.

8. Boîte de vitesses selon l'une des revendications 1 à 7, **caractérisée en ce que** :
- l'organe (31) de frottement est un synchroniseur classique de grande capacité énergétique, ou un embrayage de type multidisque humide, ou un embrayage sec.

9. Boîte de vitesses selon l'une des revendications 1 à 8, **caractérisée en ce que** :
- l'organe (31) de frottement est remplacé par un rapport de démultiplication supplémentaire, ou intermédiaire, ne servant que pour le passage de couple temporaire lors du changement de rapport et l'égalisation des régimes des éléments à craboter lors du changement de rapport.

10. Boîte de vitesses selon l'une des revendications 1 à 9, **caractérisée en ce que** l'arbre (7) primaire est un arbre simple, non concentrique.

11. Boîte de vitesses selon l'une des revendications 1 à 10, **caractérisée en ce qu'**elle comporte un deuxième arbre secondaire.

12. Procédé de changement de rapport de vitesses montant avec couple positif pour passer d'un rapport initial à un rapport final, ce procédé mettant en oeuvre la boîte (4) de vitesses définie selon l'une des revendications 1 à 11 et comportant les étapes suivantes :
- ouvrir l'embrayage (3) de manière à le mettre à la limite du couple fourni par le moteur (2) thermique,
- positionner le crabot (28) du rapport initial en position auto-éjectable (position d),
- actionner l'organe (31) de frottement de manière à réduire progressivement le couple transmis par le rapport initial jusqu'au couple nul de manière à amener la rampe (43) du crabot (40) des pignons fous (15-17, 23, 24) en contact avec le crabot (39) des manchons (27-29) du rapport initial pour que ce crabot (28) s'éjecte mécaniquement,
- piloter la diminution du régime de l'arbre (7) primaire jusqu'à atteindre sensiblement le régime du rapport final à engager par action sur l'organe (31) de frottement,
- engager le rapport final en positionnant le manchon de crabotage (27) auto-éjectant qui lui est associé en position de verrouillage (position b),
- réduire progressivement le couple (Cderiv) transmis par l'organe (31) de frottement, de sorte que tout le couple soit transmis aux roues (5) par le rapport final, et
- fermer progressivement l'embrayage (3).

13. Procédé selon la revendication 12, **caractérisé en ce qu'**il comporte l'étape suivante :
- utiliser l'organe (31) de frottement pour positionner le crabot (28) en position auto-éjectable.

14. Procédé de changement de rapport de vitesses descendant avec couple positif pour passer d'un rapport initial à un rapport final, ce procédé mettant en oeuvre la boîte (4) de vitesses définie selon l'une des revendications 1 à 11 et comportant les étapes suivantes :
- ouvrir l'embrayage (3) de manière à le mettre à la limite du couple fourni par le moteur (2) thermique,
- positionner le crabot du rapport initial en position auto-éjectable (position d),
- actionner l'organe (31) de frottement de manière à réduire progressivement le couple transmis par le rapport initial jusqu'au couple nul de manière à amener la rampe (43) du crabot (40) des pignons fous (15-17, 23, 24) en contact avec le crabot (39) des manchons (27-29) du rapport initial pour que ce crabot (28) s'éjecte mécaniquement,
- diminuer le régime de l'arbre (7) primaire de manière s'assurer que le crabot du rapport initial est éjecté,
- accélérer le moteur (2) thermique de manière à lui faire atteindre le régime cible du rapport final à engager,
- piloter le régime de l'arbre (7) primaire jusqu'à atteindre sensiblement le régime du rapport final à engager par action sur l'organe (31) de frottement et de l'embrayage (3),
- engager le rapport final en positionnant le crabot (27) auto-éjectant qui lui est associé en position de verrouillage (position b),
- réduire progressivement le couple transmis par l'organe (31) de frottement de manière à ce que tout le couple soit transmis aux roues (5) par le crabot engagé, et
- fermer progressivement l'embrayage (3).

15. Procédé selon la revendication 14, **caractérisé en ce qu'**il comporte l'étape suivante :
- utiliser l'organe (31) de frottement pour positionner le crabot (28) en position auto-éjectable.

16. Procédé selon la revendication 14 ou 15, **caractérisé en ce que** :
- l'accélération du moteur (2) thermique est effectuée avant de positionner le crabot du rapport initial en position auto-éjectable, de manière à limiter l'énergie à passer dans l'organe (31) de frottement.

17. Procédé de changement de rapport montant ou descendant à couple négatif pour passer d'un rapport initial à un rapport final, ce procédé mettant en oeuvre la boîte (4) de vitesses définie selon l'une des revendications 1 à 11 et comportant les étapes suivantes :
- ouvrir complètement l'embrayage (3),
- dégager le rapport initial,
- piloter le régime de l'arbre (7) primaire via l'ouverture partielle de l'organe (31) de frottement,
- engager le rapport final, et
- fermer l'embrayage (3).

18. Utilisation de la boîte (4) de vitesses selon l'une des revendications 1 à 11, dans laquelle on ralentit l'arbre (7) primaire avant d'engager la marche arrière par action de l'organe (31) de frottement avant engagement.

## Claims

1. A manually controlled gear box (MCGB) (4), comprising:
- a primary shaft (7) for connection to a heat engine (2) and a secondary shaft (8) for connection to the wheels (5) of the vehicle, the two shafts (7, 8) being interconnected by gears providing the gear ratios,
- these gears each comprising a wheel (10-12, 21, 22) rotationally engaged with one of the shafts and an idle pinion (15-17, 23, 24) mounted on the other shaft which mesh together, and
- clutch sleeves (27-29), each being able to be attached to two idle pinions also provided with dogs (40), these clutch sleeves (27-29) providing the gear ratio shift,
- a friction member (31) associated with a reduction ratio, this friction member (31) temporarily transmitting the torque during gear ratio shifts by this reduction ratio,
**characterised in that**:
- the dogs (39) of the sleeves (27-29) and idle pinions (15-17, 23, 24) are self-ejecting, the self-ejecting dogs (40) of the idle pinions (15-17, 23, 24) having a ramp (43) on the non-working flanks (40.2) thereof and enabling the final gear (N+1) to be engaged while the initial gear (N) is still engaged without breaking the torque.

2. The gear box according to claim 1, **characterised in that**:
- the friction member (31) is associated with the highest gear of the gear box.

3. The gear box according to any of claims 1 to 2, **characterised in that**:
- the idle pinions (15-17, 23, 24) are arranged in pairs, with a single self-ejecting clutch sleeve (27-29) per pair,
- the clutch sleeve of a pair engaging one of the two idle pinions by moving in one direction and the other idle pinion by moving in the other direction,
- these pairs of idle pinions (15-17, 23, 24) being mounted either on the primary shaft (7) or on the secondary shaft (8).

4. The gear box according to claim 3, **characterised in that**:
- the pairs of idle pinions are arranged such that two numerically adjacent gears can be engaged with different clutch sleeves, particularly in a gear configuration of (1-4; 2-5; 3-6) or (1-3; 4-6; 2-5).

5. The gear box according to claim 3 or 4, **characterised in that**:
- the combination of pinions is such that the activators controlling the dogs can move in the same direction for successive gear shifts.

6. The gear box according to any of claims 1 to 5, **characterised in that**:
- the self-ejecting clutch sleeves (27-29) are associated with a locking stage (45) on the idle pinions side providing the locking of the engaged gear ratio.

7. The gear box according to any of claims 1 to 6, **characterised in that** it comprises six gear ratios, the friction member (31) being associated with the 3^{rd} to 6^{th} gear.

8. The gear box according to any of claims 1 to 7, **characterised in that**:
- the friction member (31) is a conventional high-energy synchroniser, or a clutch of the wet multi-disc type, or a dry clutch.

9. The gear box according to any of claims 1 to 8, **characterised in that**:
- the friction member (31) is replaced by an additional, or intermediate, reduction ratio which only serves for the temporary torque shift upon gear shift and the load equalisation of elements to be clutched upon gear shift.

10. The gear box according to any of claims 1 to 9, **characterised in that** the primary shaft (7) is a simple, non-concentric shaft.

11. The gear box according to any of claims 1 to 10, **characterised in that** it comprises a second secondary shaft.

12. An upward gear shifting method with positive torque for shifting from an initial gear to a final gear, which method implements the gear box (4) defined in any of claims 1 to 11 and comprises the following steps:
- opening the clutch (3) so as to put it at the limit of the torque provided by the heat engine (2),
- placing the dog (28) of the initial gear in the self-ejecting position (position d),
- actuating the friction member (31) such that the torque transmitted by the initial gear is gradually reduced to the zero torque so as to bring the ramp (43) of the dog (40) of the idle pinions (15-17, 23, 24) into contact with the dog (39) of the sleeves (27-29) of the initial gear such that the dog (28) is mechanically ejected,
- controlling the load decrease of the primary shaft (7) until the load of the final gear to be engaged is substantially achieved by acting on the friction member (31),
- engaging the final gear by placing the self-ejecting clutch sleeves (27) associated therewith in the locking position (position b),
- gradually decreasing the torque (Cderiv) transmitted by the friction member (31), such that the entire torque is transmitted to the wheels (5) by the final gear, and
- gradually closing the clutch (3).

13. The method according to claim 12, **characterised in that** it comprises the following step:
- using the friction member (31) for positioning the clutch sleeve (28) in the self-ejecting position.

14. A downward gear shifting method with positive torque for shifting from an initial gear to a final gear, which method implements the gear box (4) defined in any of claims 1 to 11 and comprises the following steps of:
- opening the clutch (3) so as to put it at the limit of the torque provided by the heat engine (2),
- placing the dog of the initial gear in the self-ejecting position (position d),
- actuating the friction member (31) such that the torque transmitted by the initial gear is gradually decreased to the zero torque so as to bring the ramp (43) of the dog (40) of the idle pinions (15-17, 23, 24) into contact with the dog (39) of the sleeves (27-29) of the initial ratio such that this dog (28) is mechanically ejected,
- decreasing the load of the primary shaft (7) such as to ensure the dog of the initial gear is ejected,
- accelerating the heat engine (2) such as to bring it to the target load of the final gear to be engaged,
- controlling the load of the primary shaft (7) until the load of the final gear to be engaged is substantially achieved by acting on the friction member (31) of the clutch(3),
- engaging the final gear by placing the self-ejecting dog (27) associated therewith in the locking position (position b),
- gradually decreasing the torque transmitted by the friction member (31), such that the entire torque is transmitted to the wheels (5) by the engaged clutch sleeve, and
- gradually closing the clutch (3).

15. The method according to claim 14, **characterised in that** it comprises the following step:
- using the friction member (31) for placing the clutch sleeve (28) in the self-ejecting position.

16. The method according to claim 14 or 15, **characterised in that**:
- the heat engine (2) acceleration is performed before placing the dog of the initial ratio in the self-ejecting position, such as to limit the energy to be put in the friction member (31).

17. An upward or downward gear shifting method with negative torque for shifting from an initial gear to a final gear, which method implements the gear box (4) defined in any of claims 1 to 11 and comprises the following steps:
- fully opening the clutch (3),
- disengaging the initial ratio,
- controlling the load of the primary shaft (7) by partly opening the friction member (31),
- engaging the final gear, and
- closing the clutch (3).

18. A use of the gear box (4) according to any of claims 1 to 11, wherein the primary shaft (7) is slowed down before engaging the reverse gear by acting on the friction member (31) prior to engagement.

## Patentansprüche

1. Getriebe (4) vom Typ eines automatisierten Schaltgetriebes (ASG) umfassend:
- eine Primärwelle (7), die dazu bestimmt ist, mit einem Verbrennungsmotor (2) verbunden zu werden, und eine Sekundärwelle (8), die dazu bestimmt ist, mit den Rädern (5) des Fahrzeugs verbunden zu werden, wobei diese beiden Wellen (7, 8) durch Zahnradgetriebe miteinander verbunden sind, die die Getriebeübersetzungen bilden,
- wobei diese Zahnradgetriebe jeweils ein Rad (10-12, 21, 22) enthalten, das drehfest mit einer der Wellen verbunden ist, und ein freilaufendes Ritzel (15-17, 23, 24), das auf der anderen Welle montiert ist, die ineinander greifen, und
- Klauenkupplungsmuffen (27-29), die jeweils zwei freilaufenden Ritzeln zugeordnet werden können, die ebenfalls mit Klauen (40) ausgestattet sind, wobei diese Klauenkupplungsmuffen (27-29) den Gangwechsel bewirken,
- ein Reibungsorgan (31), das einer Getriebestufe zugeordnet ist, wobei dieses Reibungsorgan (31) bei den Gangwechseln über diese Getriebestufe vorübergehend ein Moment überträgt,
**dadurch gekennzeichnet, dass**:
- die Klauen (39) der Muffen (27-29) und der freilaufenden Ritzel (15-17, 23, 24) selbstausstoßend sind, wobei die selbstausstoßenden Klauen (40) der freilaufenden Ritzel (15-17, 23, 24) an ihrer rückwärtigen Flanke (40.2) eine Rampe (43) aufweisen, die das Einlegen des neuen Ganges (N+1) ohne Momentunterbrechung ermöglichen, während der alte Gang (N) noch eingelegt ist.

2. Getriebe nach Anspruch 1, **dadurch gekennzeichnet, dass**:
- das Reibungsorgan (31) dem höchsten Gang des Getriebes zugeordnet ist.

3. Getriebe nach einem der Ansprüche 1 bis 2, **dadurch gekennzeichnet, dass**:
- die freilaufenden Ritzel (15-17, 23, 24) paarweise mit einer einzigen selbstausstoßenden Klauenkupplungsmuffe (27-29) je Paar zusammengefasst sind,
- wobei die Klauenkupplungsmuffe eines Paares eines der beiden freilaufenden Ritzel durch Verschiebung in einer Richtung und das andere freilaufende Ritzel durch Verschiebung in der anderen Richtung einlegt,
- wobei die freilaufenden Ritzelpaare (15-17, 23, 24) entweder auf der Primärwelle (7) oder auf der Sekundärwelle (8) montiert sind.

4. Getriebe nach Anspruch 3, **dadurch gekennzeichnet, dass**:
- die freilaufenden Ritzelpaare derart angeordnet sind, dass die Möglichkeit besteht, zwei zahlenmäßig aufeinander folgende Gänge mit unterschiedlichen Klauenkupplungsmuffen einzulegen, vor allem in einer Gangkonfiguration (1-4; 2-5; 3-6) oder (1-3; 4-6; 2-5).

5. Getriebe nach Anspruch 3 oder 4, **dadurch gekennzeichnet, dass**:
- die Ritzel derart kombiniert sind, dass die Möglichkeit zu einer Bewegung der Aktoren zum Ansteuern der Klauen in einer selben Richtung zum Einlegen aufeinanderfolgender Gänge besteht.

6. Getriebe nach einem der Ansprüche 1 bis 5, **dadurch gekennzeichnet, dass**:
- die selbstausstoßenden Klauenkupplungsmuffen (27-29) einer Verriegelungsstufe (45) auf Seiten der freilaufenden Ritzel zugeordnet sind, die die Verriegelung des eingelegten Ganges bewirkt.

7. Getriebe nach einem der Ansprüche 1 bis 6, **dadurch gekennzeichnet, dass** es sechs Gänge enthält, wobei das Reibungsorgan (31) dem 3. bis zum 6. Gang zugeordnet ist.

8. Getriebe nach einem der Ansprüche 1 bis 7, **dadurch gekennzeichnet, dass**:
- das Reibungsorgan (31) eine herkömmliche Synchronisiereinrichtung mit einer hohen Energiekapazität oder eine Mehrscheiben-Nasskupplung oder eine Trockenkupplung ist.

9. Getriebe nach einem der Ansprüche 1 bis 8, **dadurch gekennzeichnet, dass**:
- das Reibungsorgan (31) durch eine zusätzliche Getriebestufe oder eine Zwischengetriebestufe ersetzt wird, die nur zum Anlegen eines vorübergehenden Moments beim Gangwechsel sowie zum Ausgleichen der Drehzahlen der beim Gangwechsel formschlüssig zu erfassenden Elemente dient.

10. Getriebe nach einem der Ansprüche 1 bis 9, **dadurch gekennzeichnet, dass** die Primärwelle (7) eine einfache, nicht konzentrische Welle ist.

11. Getriebe nach einem der Ansprüche 1 bis 10, **dadurch gekennzeichnet, dass** es eine zweite Sekundärwelle enthält.

12. Verfahren zum Hochschalten von Gängen mit einem positiven Moment für den Übergang von einem alten Gang in einen neuen Gang, wobei dieses Verfahren das Getriebe (4) verwendet, das nach einem der Ansprüche 1 bis 11 definiert wird und die folgenden Schritte umfasst:
- die Kupplung (3) so öffnen, dass sie an die Grenze des vom Verbrennungsmotor (2) übertragenen Moments stößt,
- die Klauenkupplung (28) des alten Ganges in die selbstausstoßende Stellung (Stellung d) bringen,
- das Reibungsorgan (31) betätigen, so dass das vom alten Gang übertragene Moment nach und nach bis auf ein Nullmoment herabgesetzt wird, so dass die Rampe (43) der Klaue (40) der freilaufenden Ritzel (15-17, 23, 24) in Kontakt mit der Klaue (39) der Muffen (27-29) des alten Ganges gebracht wird, damit sich diese Klaue (28) mechanisch ausstößt,
- die Verringerung der Drehzahl der Primärwelle (7) ansteuern, bis im Wesentlichen die Drehzahl des neu einzulegenden Ganges erreicht wird, indem das Reibungsorgan (31) betätigt wird,
- den neuen Gang einlegen, indem die ihm zugeordnete selbstausstoßende Klauenkupplungsmuffe (27) in die Verriegelungsstellung (Stellung b) gebracht wird,
- das vom Reibungsorgan (31) übertragene Moment (Cderiv) nach und nach verringern, so dass vom neuen Gang das gesamte Moment auf die Räder (5) übertragen wird, und
- die Kupplung (3) nach und nach schließen.

13. Verfahren nach Anspruch 12, **dadurch gekennzeichnet, dass** es den folgenden Schritt enthält:
- das Reibungsorgan (31) verwenden, um die Klauenkupplungsmuffe (28) in die selbstausstoßende Stellung zu bringen.

14. Verfahren zum Herunterschalten von Gängen mit einem positiven Moment für den Übergang von einem alten Gang in einen neuen Gang, wobei dieses Verfahren das Getriebe (4) verwendet, das nach einem der Ansprüche 1 bis 11 definiert wird und die folgenden Schritte umfasst:
- die Kupplung (3) so öffnen, dass sie an die Grenze des vom Verbrennungsmotor (2) übertragenen Moments stößt,
- die Klauenkupplung des alten Ganges in die selbstausstoßende Stellung (Stellung d) bringen,
- das Reibungsorgan (31) betätigen, so dass das vom alten Gang übertragene Moment nach und nach bis auf ein Nullmoment herabgesetzt wird, so dass die Rampe (43) der Klaue (40) der freilaufenden Ritzel (15-17, 23, 24) in Kontakt mit der Klaue (39) der Muffen (27-29) des alten Ganges gebracht wird, damit sich diese Klaue (28) mechanisch ausstößt,
- die Drehzahl der Primärwelle (7) verringern, um sicherzustellen, dass die Klaue des alten Ganges ausgestoßen wird,
- den Verbrennungsmotor (2) beschleunigen, um ihn dazu zu bringen, die Zieldrehzahl des einzulegenden neuen Ganges zu erreichen,
- die Drehzahl der Primärwelle (7) ansteuern, bis im Wesentlichen die Drehzahl des neuen einzulegenden Ganges erreicht wird, indem das Reibungsorgan (31) und die Kupplung (3) betätigt werden,
- den neuen Gang einlegen, indem die ihm zugeordnete selbstausstoßende Klauenkupplungsmuffe (27) in die Verriegelungsstellung (Stellung b) gebracht wird,
- das vom Reibungsorgan (31) übertragene Moment nach und nach verringern, so dass von der eingelegten Klaue das gesamte Moment auf die Räder (5) übertragen wird, und
- die Kupplung (3) nach und nach schließen.

15. Verfahren nach Anspruch 14, **dadurch gekennzeichnet, dass** es den folgenden Schritt enthält:
- das Reibungsorgan (31) verwenden, um die Klauenkupplungsmuffe (28) in die selbstausstoßende Stellung zu bringen.

16. Verfahren nach Anspruch 14 oder 15, **dadurch gekennzeichnet, dass**:
- die Beschleunigung des Verbrennungsmotors (2) erfolgt, bevor die Klaue des alten Ganges in die selbstausstoßende Stellung gebracht wird, so dass die ins Reibungsorgan (31) einzuleitende Energie begrenzt wird.

17. Verfahren zum Hochschalten oder Herunterschalten von Gängen mit einem negativen Moment für den Übergang von einem alten Gang in einen neuen Gang, wobei dieses Verfahren das Getriebe (4) verwendet, das nach einem der Ansprüche 1 bis 11 definiert wird und die folgenden Schritte umfasst:
- die Kupplung (3) vollständig öffnen,
- den alten Gang herausnehmen,
- die Drehzahl der Primärwelle (7) durch die teilweise Öffnung des Reibungsorgans (31) ansteuern,
- den neuen Gang einlegen und
- die Kupplung (3) schließen.

18. Verwendung des Getriebes (4) nach einem der Ansprüche 1 bis 11, bei der man die Primärwelle (7) vor dem Einlegen des Rückwärtsganges durch Betätigung des Reibungsorgans (31) vor dem Einlegen abbremst.
